# EUROPEAN PATENT SPECIFICATION

(11) **EP 3 444 914 B1**
(45) Date of publication and mention of the grant of the patent: **06.10.2021**
(21) Application number: 17465539.9
(22) Date of filing: 18.08.2017
(51) Int. Cl.: H02J 5/00, H02J 7/02, H04B 5/00, H02J 50/10, H02J 50/60

(54) **WIRELESS CHARGING DEVICE FOR AN INDUCTIVE POWER TRANSFER, WIRELESS POWER RECEIVING UNIT AND METHOD FOR WIRELESSLY TRANSFERRING POWER FOR WIRELESS CHARGING**
VORRICHTUNG ZUM DRAHTLOSEN LADEN FÜR EINEN INDUKTIVSTROMTRANSFER, EINHEIT ZUM DRAHTLOSEN STROMEMPFANG UND VERFAHREN ZUM DRAHTLOSEN TRANSFER VON STROM ZUM DRAHTLOSEN LADEN
DISPOSITIF DE CHARGE SANS FIL POUR UN TRANSFERT DE PUISSANCE INDUCTIVE, UNITÉ DE RÉCEPTION DE PUISSANCE SANS FIL ET PROCÉDÉ DE TRANSFERT D'ÉNERGIE SANS FIL POUR UNE CHARGE SANS FIL

(43) Date of publication of application: 20.02.2019
(73) Proprietor: Vitesco Technologies GmbH, 30165 Hannover (DE)
(72) Inventor: Popescu, Marius Lucian, 210184 Tg-jiu, Gorj (RO)

(56) References cited:
- EP-A1- 3 093 957
- US-A1- 2014 070 623

## Description

The invention is concerned with a wireless charging device for generating a time-varying magnetic flux within a predefined coupling zone which is provided for positioning a wireless power receiving unit for an inductive power transfer, wherein an electromagnetic coil arrangement is provided for generating the magnetic flux and an electronic power control unit is designed to control an electric power that is provided to the coil arrangement, wherein the coil arrangement comprises several electromagnetic coils, each of which is designed to provide a part of the magnetic flux in a different region of the coupling zone, wherein the power control unit is designed to switch the electric power for each of the coils independently of the remaining coils.

Such a wireless charging device is disclosed by the US 2014/0070623 A and by the EP 2 093 957 A1.

The EP 2 093 957 A1 also discloses a sensing unit that is designed to detect the presence of an object in the coupling zone before and/or while the magnetic flux is generated.

In the prior art a power transfer is completely terminated when a foreign object is detected..

Such a charging device generates a time varying magnetic flux within a predefined coupling zone. By positioning the wireless power receiving unit inside the coupling zone, the receiving unit may transform the magnetic flux into an electric voltage. An example for such a wireless charging device is a charging station for an electric vehicle. Such a charging station may comprise a wireless charging device integrated into the ground such that the electric vehicle comprising said receiving unit may be parked on top or over the charging device and may be provided with power by said inductive power transfer.

The wireless charging device is a transmitter for transmitting the power needed in the receiving unit for e.g. recharging a battery of e.g. an electric vehicle. The charging device may comprise a coil arrangement for generating the time varying magnetic flux. Such a coil arrangement may comprise one large electromagnetic coil that fills the whole coupling zone with the needed magnetic flux. As there is a gap of air between the charging device and the receiving unit inside the coupling zone, there is the risk of the intrusion of an object that may be heated up due to induction inside the object itself. Examples for such an object are an animal or a metallic element like, e.g., a coin. If such an object is detected, the electric power provided to the coil is interrupted in order to prevent e.g. a fire. The charging process may only continue, after the object is removed from the coupling zone.

If the wireless power transfer is used for recharging the battery of an electric vehicle, the charging process may take place overnight, while the user does not need the vehicle. However, if during the charging process an object is detected in the coupling zone, the charging process is interrupted. If the user returns to his electric vehicle the next morning, he will therefore find that the battery of the electric vehicle is not charged as planned.

In is an object of the present invention to reduce the influence of an object that intrudes the coupling zone of a wireless charging device.

The object is solved by the subject matter of the independent claim. Further advantages may be obtained by the subject matter of the dependent claims, the embodiments described in the following descriptions and illustrated in the figures.

The invention provides a wireless charging device for generating a time varying magnetic flux within a predefined coupling zone which is provided for positioning a wireless power receiving unit for an inductive power transfer, like e.g., for an inductive charging process of an energy storage, like a battery of an electric vehicle. An electromagnetic coil arrangement is provided for generating the magnetic flux. Furthermore, an electronic power control unit is designed to control an electric power that is provided to the coil arrangement. The control of the electric power may comprise switching the electric power on and off.

If a further object, like, e.g., an animal or a metallic element (e.g. a coin or a can) is placed within the coupling zone, no magnetic flux should be transmitted to that object, as it will otherwise heat up and/or will be attracted to the coil arrangement, which might damage the latter. On the other hand, simply interrupting the power transfer by switching off the coil arrangement, leads to the described problem that e.g. a charging process of an electric vehicle is interrupted.

In order to be able to continue the power transfer, the inventive charging device provides a coil arrangement that comprises several electromagnetic coils, each of which is designed to provide a part of the magnetic flux in a different region or area of the coupling zone. In other words, the magnetic flux is generated by means of several independent coils that transmit or emit the magnetic flux in different regions. The power control unit is designed to switch the electric power for each of the coils independently of the remaining coils. By this arrangement, the magnetic flux inside the coupling zone may be turned or switched on and off in different regions of the coupling zone independently. If an object is placed in one zone, the magnetic flux for this zone may be turned off, while the magnetic flux for the remaining zones may still be transmitted. Thus, the power transfer is only reduced, but not interrupted completely. The power control unit may comprise at least one electronic switch, like, e.g., a transistor, for switching the electric power.

The inventive charging device providesa sensing unit that is designed to detect the presence of an object in the coupling zone. Such a sensing unit may comprise, e.g., a camera and/or a measurement circuit for measuring the magnetic coupling between the charging device and said power receiving unit. If an object is placed in the coupling zone, the coupling efficiency is reduced which can be detected by the measurement circuit. Sensing units of said kind are known from the prior art. The sensing unit is also designed to locate the position of the object. For example, it can be detected, for which coil of the coil arrangement the magnetic coupling is reduced. This is the coil, where the object is placed on top. This detection and locating of the object is performed before and/or while the magnetic flux is generated by providing the electric power to the coils. In other words, the preparation of the inductive power transfer and the inductive power transfer itself are monitored by the sensing unit. The power control unit is designed to interrupt the respective electric power for one or some of the coils in dependence on the position of the object, while the respective electric power of at least one of the coils is continued to be provided. In other words, switching off the electric power of one or some of the coils is automated by means of the sensing unit.

The invention provides the advantage that the inductive power transfer may be continued, even if an object is placed within one region of the coupling zone.

The invention also provides further embodiments, which yield additional advantages.

According to one embodiment the coils are arranged in a non-overlapping pattern. In general an electromagnetic coil comprises windings of, e.g. wire or another electrically conductive material, wherein the windings surrounds a coil area (known as the coil's eye) . The coin areas of the different coils are non-overlapping in said embodiment. This provides the advantage that switching off the power of one single coil is sufficient to prevent the generation of magnetic flux in the region of that coil.

According to one embodiment the coils are arranged in a coplanar pattern. In other words, the windings of the coils are arranged next to each other or corresponding windings are arranged in common planes. This provides the advantage that each coil has the same distance to the coupling zone such that power transfer with each coil is of the same efficiency.

According to one embodiment the coils are arranged such that they touch each other. In other words, there are no gaps between neighboring coils. This provides the advantage that in the case that all coils are provided with electric power, the coil arrangement acts as efficiently as one single large coil.

In one embodiment the power control unit is designed to interrupt the electric power for the respective coil by blocking any electric current flow through the coil. This prevents the induction of electric current by one of the remaining coils that is still provided with electric power.

In one embodiment a temperature of the object and/or the surroundings of the object is measured and the power control unit is designed to turn off the power of at least one more coil or all coils, if the measured temperature is above a predefined threshold. This provides the advantage that the power transfer is reliably interrupted, if switching off one or some coils does not prevent the heating up of the object due to the remaining magnetic flux. The temperature measurement may be performed by means of an infrared sensor an/or an infrared camera and/or by a PTC-element (PTC - positive temperature coefficient).

A wireless power receiving unit, as it may be provided in an electric vehicle for recharging a battery, may comprise one single electromagnetic coil for covering the whole coupling zone. However, one aspect of the invention is concerned with a wireless power receiving unit for placing in a coupling zone of a wireless charging unit. The power receiving unit comprises a converting unit for converting a time-varying magnetic flux into an electric voltage. According to the prior art, this converting unit can be a single coilor comprises several electromagnetic coils each of which is designed to receive a part of the magnetic flux in a different region of the coupling zone. This provides the advantage that for each coil of the wireless charging unit a corresponding coil of the power receiving unit may be provided such that the transfer of magnetic flux can be performed with low losses.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

The illustration show:
- Fig. 1: a schematic illustration of a top view of an electromagnetic coil arrangement of a wireless charging device according to the invention;
- Fig. 2: a schematic illustration of a top view of a converting unit of a power receiving unit according to the invention; and
- Fig. 3: a schematic illustration of a wireless power transfer as it can be obtained with the charging device according to Fig. 1 and the power receiving unit according to Fig. 2 and according to an embodiment of the inventive method.

In the figures elements that provide the same function are marked with identical reference signs.

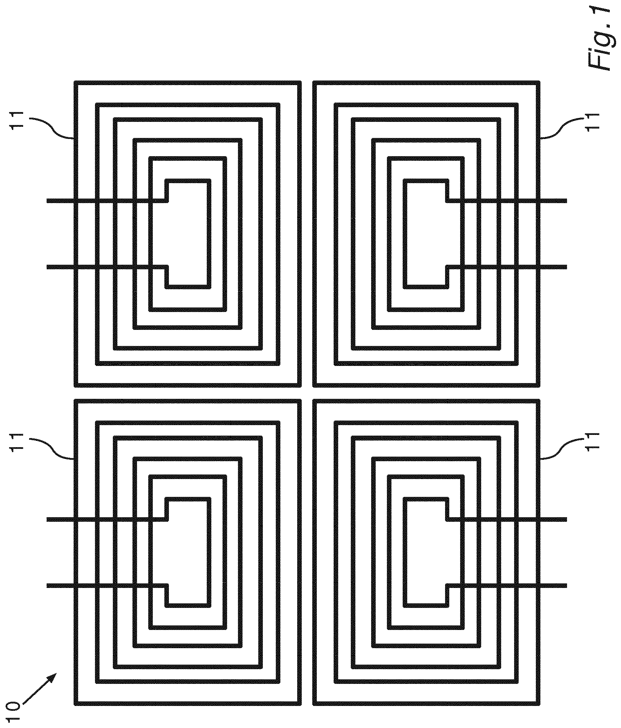

Fig. 1 illustrates how a coil arrangement 10 can provide several different electromagnetic coils 11. Each coil 11 is re-presented by a coil-symbol only. The coil arrangement 10 allows for providing electric power to each of the coils 11 individuality. The coils are arranged in a non-overlapping pattern. The coils are arranged in a coplanar pattern. The coils 11 are arranged such that they touch each other. Each coil may generate a magnetic field or a magnetic flux, if electric power (electric alternating current and electric voltage) is provided to that coil 11.

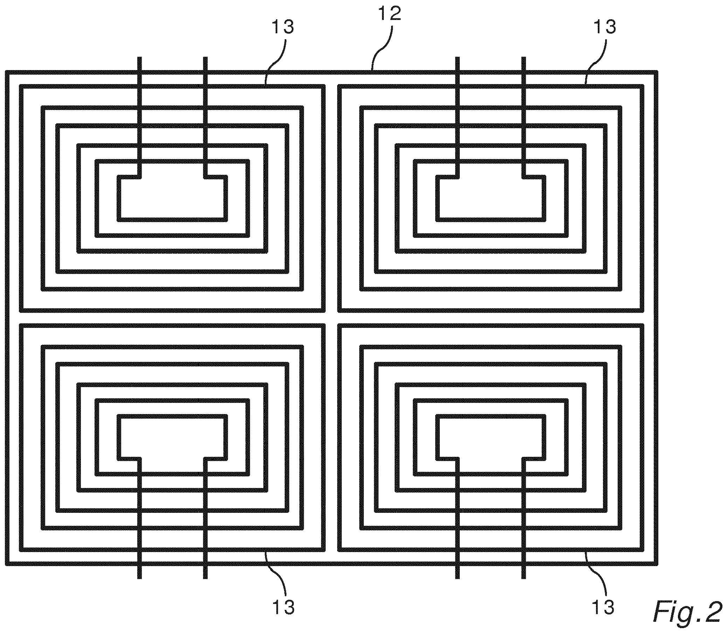

Fig. 2 illustrates a converting unit 12 as it may be provided in a wireless power receiving unit. The converting unit 12 may comprise several independent electromagnetic coils 13 for receiving the magnetic flux from a respective corresponding coil 11 of the charging device 10. Each coil 13 may generate from the received magnetic flux an electric voltage.

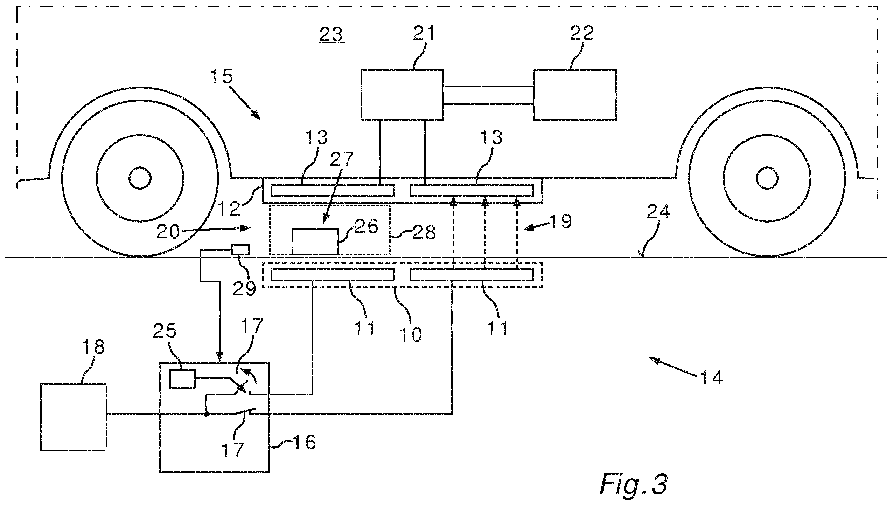

Fig. 3 illustrates how power may be wirelessly transferred from a wireless charging device 14 to a wireless power receiving unit 15. The wireless charging device 14 may comprise a coil arrangement 10 with coils 11 as illustrated in Fig. 1. The receiving unit 15 may comprise a converting unit 12 with coils 13 as illustrated in Fig. 2.

The charging device 14 may comprise an electronic power control unit 16 which may comprise switching elements 17, e.g. transistor, for switching the electric power provided to the coils 11. Each coil 11 may be switched on and off individually. The electric power may be provided by a power source 18, e.g. an electrical power network or grid. Each switching unit 17 may comprise one or more transistors. Each coil 11 that is provided with electric power generates a part of magnetic flux 19 in a coupling zone 20, in which the converting unit 12 may be arranged. The converting unit 12 generates an electric voltage from the magnetic flux 19. The electric voltage of the individual coils 13 may be used by a charger 21 for charging e.g. an electric battery 22. The charger 21 may comprise a rectifier as is known from the prior art. The converting unit 12, the charger 21 and the battery 22 may be provided in an electric vehicle 23 that may be parked over the charging device 14. The charging device 14 may be e.g. integrated into the surface of a ground 23, like e.g. a road 24.

A sensing unit 25 may sense, whether an object 26 is arranged between the coil arrangement 10 and the converting unit 12 inside the coupling zone 20 such that magnetic flux 19 may heat up the object 26. The sensing unit 25 may also detect a position 27 of the object 26 in the coupling zone 20. A switch element 17 corresponding to the coil 11 which generates the magnetic flux in a region 28 which comprises position 27 may be interrupted or opened as a function of the sensed position 27, such that the electric power for coil 11 of region 28 is switched off. Object 26 is therefore not heated up by the magnetic flux of that coil 11 anymore.

The remaining coils 11 (Fig. 3 only shows one remaining coil 11) may continue generating magnetic flux 19, i.e. they may be continued to be powered by the power control unit 16. Thus, the power transfer to the receiving unit 12 may be continued although an object 26 is arranged in one region 28 of the coupling zone 20.

Thus the problem of an object 26 arranged between the coil arrangement 10 and the converting unit 12 is solved by dividing the transmitting coil or the coil arrangement 10 in several coils or several equal pieces or regions, like e.g. four pieces or regions, and to detect the foreign object 26 for all the coils 11 independently. If an object 26 is detected, the power will be interrupted for just that one coil 11 that is affected. The other coils will remain working, i.e. they will continued to be powered. If the object 26 continues to increase the temperature, the power for all coils 11 may be interrupted. The increase of temperature can be detected by a temperature measuring unit 29 as it is known from the prior art.

The advantage is that the charging of a battery 22 or in general the inductive power transfer may continue even after an object 26 is detected in the air gap between the coil arrangement 10 and the converting unit 12. This solution can be applied to wireless chargers, like e.g., stationary wireless charging units for electric vehicles 23.

### Reference signs

- 10: coil arrangement
- 11: coil
- 12: converting unit
- 13: coil
- 14: charging device
- 15: receiving unit
- 16: power control unit
- 17: switching element
- 18: power source
- 19: magnetic flux
- 20: coupling zone
- 21: charger
- 22: battery
- 23: electric vehicle
- 24: ground
- 25: sensing unit
- 26: object
- 27: position
- 28: region
- 29: temperature measuring unit

## Claims

1. Wireless charging device (14) for generating a time-varying magnetic flux (19) within a predefined coupling zone (20) which is provided for positioning a wireless power receiving unit (15) for an inductive power transfer, wherein an electromagnetic coil arrangement (10) is provided for generating the magnetic flux (19) and an electronic power control unit (16) is designed to control an electric power that is provided to the coil arrangement (10), wherein the coil arrangement (10) comprises several electromagnetic coils (11), each of which is designed to provide a part of the magnetic flux (19) in a different region (28) of the coupling zone (20), wherein the power control unit (16) is designed to switch the electric power for each of the coils (11) independently of the remaining coils (11), wherein a sensing unit (25) is provided that is designed to detect the presence of an object (26) in the coupling zone (20) before and/or while the magnetic flux (19) is generated,
**characterized in that**
the sensing unit (25) is designed to locate the position (27) of the object (26), and that the power control unit (16) is designed to interrupt the respective power for one or some of the coils (11) in dependence of the position (27) of the object (26), while the respective power of at least one of the coils (11) is continued to be provided.

2. Charging device (14) according to claim 1, wherein the coils (11) are arranged in a non-overlapping pattern.

3. Charging device (14) according to any of the preceding claims, wherein the coils (11) are arranged in a coplanar pattern.

4. Charging device (14) according to any of the preceding claims, wherein the coils (11) are arranged such that they touch each other.

5. Charging device (14) according to any of the preceding claims, wherein the power control unit (16) is designed to interrupt the electric power for the respective coil (11) by blocking any electric current flow through that coil.

6. Charging device (14) according to any of the preceding claims, wherein a temperature of the object (26) and/or in the surroundings of the object (26) is measured and the power control unit (16) is designed to turn off the power of at least one more coil (11) or all coils (11), if the measured temperature is above a predefined threshold.

## Patentansprüche

1. Drahtlose Ladevorrichtung (14) zum Erzeugen eines zeitveränderlichen Magnetflusses (19) in einer vordefinierten Kopplungszone (20), die zum Positionieren einer drahtlosen Energieaufnahmeeinheit (15) für eine induktive Energieübertragung bereitgestellt ist, wobei eine elektromagnetische Spulenanordnung (10) zum Erzeugen des Magnetflusses (19) bereitgestellt ist und eine elektronische Energiesteuereinheit (16) ausgelegt ist, eine elektrische Energie zu steuern, die zu der Spulenanordnung (10) bereitgestellt wird, wobei die Spulenanordnung (10) mehrere elektromagnetische Spulen (11) umfasst, von denen jede ausgelegt ist, einen Teil des Magnetflusses (19) in einer unterschiedlichen Region (28) der Kopplungszone (20) bereitzustellen, wobei die Energiesteuereinheit (16) ausgelegt ist, die elektrische Energie für jede der Spulen (11) unabhängig von den restlichen Spulen (11) zu schalten, wobei eine Sensoreinheit (25) bereitgestellt ist, die ausgelegt ist, das Vorhandensein eines Objekts (26) in der Kopplungszone (20) zu detektieren, bevor und/oder während der Magnetfluss (19) erzeugt wird,
**dadurch gekennzeichnet, dass**
die Sensoreinheit (25) ausgelegt ist, die Position (27) des Objekts (26) zu lokalisieren, und dass die Energiesteuereinheit (16) ausgelegt ist, die jeweilige Energie für eine oder einige der Spulen (11) in Abhängigkeit von der Position (27) des Objekts (26) zu unterbrechen, während die jeweilige Energie mindestens einer der Spulen (11) weiterhin bereitgestellt wird.

2. Ladevorrichtung (14) nach Anspruch 1, wobei die Spulen (11) in einem sich nicht überlappenden Muster angeordnet sind.

3. Ladevorrichtung (14) nach einem der vorhergehenden Ansprüche, wobei die Spulen (11) in einem komplanaren Muster angeordnet sind.

4. Ladevorrichtung (14) nach einem der vorhergehenden Ansprüche, wobei die Spulen (11) derart angeordnet sind, dass sie einander berühren.

5. Ladevorrichtung (14) nach einem der vorhergehenden Ansprüche, wobei die Energiesteuereinheit (16) ausgelegt ist, die elektrische Energie für die jeweilige Spule (11) durch Blockieren eines elektrischen Stromflusses durch diese Spule zu unterbrechen.

6. Ladevorrichtung (14) nach einem der vorhergehenden Ansprüche, wobei eine Temperatur des Objekts (26) und/oder in der Umgebung des Objekts (26) gemessen wird und die Energiesteuereinheit (16) ausgelegt ist, die Energie mindestens einer weiteren Spule (11) oder aller Spulen (11) abzuschalten, wenn die gemessene Temperatur über einem vordefinierten Schwellenwert liegt.

## Revendications

1. Dispositif de charge sans fil (14) destiné à générer un flux magnétique variable dans le temps (19) à l'intérieur d'une zone de couplage prédéfinie (20) qui est prévue pour positionner une unité de réception d'énergie sans fil (15) pour un transfert d'énergie par induction, un agencement de bobines électromagnétiques (10) étant prévu pour générer le flux magnétique (19) et une unité électronique de contrôle d'énergie (16) étant conçue pour contrôler une énergie électrique qui est fournie à l'agencement de bobines (10), l'agencement de bobines (10) comprenant plusieurs bobines électromagnétiques (11), dont chacune est conçue pour fournir une partie du flux magnétique (19) dans une région différente (28) de la zone de couplage (20), l'unité de contrôle d'énergie (16) étant conçue pour commuter l'énergie électrique pour chacune des bobines (11) indépendamment des bobines restantes (11), une unité de détection (25) étant prévue, laquelle est conçue pour détecter la présence d'un objet (26) dans la zone de couplage (20) avant et/ou pendant que le flux magnétique (19) est généré,
**caractérisé en ce que**
l'unité de détection (25) est conçue pour localiser la position (27) de l'objet (26), et **en ce que** l'unité de contrôle d'énergie (16) est conçue pour interrompre l'énergie respective pour une ou certaines des bobines (11) en fonction de la position (27) de l'objet (26), pendant que l'énergie respective d'au moins une des bobines (11) continue à être fournie.

2. Dispositif de charge (14) selon la revendication 1, dans lequel les bobines (11) sont disposées en un motif sans chevauchement.

3. Dispositif de charge (14) selon l'une quelconque des revendications précédentes, dans lequel les bobines (11) sont disposées en un motif coplanaire.

4. Dispositif de charge (14) selon l'une quelconque des revendications précédentes, dans lequel les bobines (11) sont disposées de telle sorte qu'elles se touchent.

5. Dispositif de charge (14) selon l'une quelconque des revendications précédentes, dans lequel l'unité de contrôle d'énergie (16) est conçue pour interrompre l'énergie électrique pour la bobine respective (11) en bloquant toute circulation de courant électrique à travers cette bobine.

6. Dispositif de charge (14) selon l'une quelconque des revendications précédentes, dans lequel une température de l'objet (26) et/ou aux alentours de l'objet (26) est mesurée et l'unité de contrôle d'énergie (16) est conçue pour couper l'énergie d'au moins une bobine supplémentaire (11) ou de toutes les bobines (11) si la température mesurée est supérieure à un seuil prédéfini.
